# EUROPEAN PATENT APPLICATION

(11) **EP 4 593 175 A1**
(43) Date of publication of application: **30.07.2025**
(21) Application number: 25153290.9
(22) Date of filing: 22.01.2025
(51) Int. Cl.: H01M 50/209, H01M 10/613, H01M 10/6556, H01M 50/509

(54) **BATTERY PACK**

(30) Priority: 23.01.2024 KR 20240010145
(71) Applicant: SAMSUNG SDI CO., LTD., Yongin-si, Gyeonggi-do 17084 (KR)
(72) Inventor: SHIN, Mansoo, 17084 Yongin-si (KR)
(74) Representative: Marks & Clerk LLP

(57) **Abstract**

A battery pack according to the present disclosure is designed to adaptively provide a capacity and an output according to demands for a battery pack. The battery pack includes a plurality of battery cells and has a simplified electrical connection structure among the plurality of battery cells such that a cooling structure for the plurality of battery cells may have uniform cooling without temperature dispersion.

## Description

### BACKGROUND

### 1. Field

One or more embodiments relate to a battery pack.

### 2. Description of the Related Art

Generally, a secondary battery can be charged and discharged, unlike a primary battery that cannot be recharged. Secondary batteries are used as energy sources for mobile devices, electric vehicles, hybrid vehicles, electric bicycles, uninterruptible power supplies, etc. According to a type of an external device to which they are applied to, secondary batteries are used in the form of a single battery or in the form of a pack in which multiple battery cells are connected and grouped into one unit.

Small mobile devices such as mobile phones may operate for a certain amount of time based on the output and capacity of a single battery, whereas for devices requiring long-term driving and high-power operations such as electric vehicles, hybrid vehicles, etc., and consuming a lot of power, a secondary battery of a pack type including a plurality of batteries is preferred due to output and capacity issues. The output voltage or output current may be increased with the number of built-in batteries.

### SUMMARY

One or more embodiments include a battery pack designed to adaptively provide a capacity and an output according to the requirements for the battery pack, the battery pack including a plurality of battery cells and having a simplified electrical connection structure among the plurality of battery cells such that a cooling structure of the plurality of battery cells may have uniform cooling without temperature dispersion.

Additional aspects will be set forth in part in the description which follows and, in part, will be apparent from the description, or may be learned by practice of the presented embodiments of the present disclosure.

According to one or more embodiments, a battery pack includes unit cells, each of which includes unit current collectors and which battery pack accommodates the unit current collectors including a first-type current collector plate for parallel connection between adjacent unit current collectors and a second-type current collector plate for serial connection between adjacent unit current collectors such that the unit current collectors are connected in serial-parallel combination; unit cooling plates, which are individualized for each of the unit blocks that comprise unit cells of the plurality of unit cells arranged in a first direction in which the unit current collectors are arranged and in a second direction intersecting the first direction, and each of which individually include an inlet and an outlet; and a plurality of third-type current collector plates forming parallel cell streams by connecting unit cells of the plurality of unit cells, the third-type current collector plates being arranged in the first direction in parallel, and the third-type current collector plates serially connecting adjacent parallel cell streams arranged in the second direction.

The battery pack may further include heat transfer sheets positioned between the unit cells and unit cooling plates in a third direction intersecting the first direction and the second direction, the heat transfer sheets being configured to mediate heat transfer, and each of the heat transfer sheets being provided for one of the unit cells.

The inlet and the outlet may be formed at an outer edge of each of the unit cooling plates.

The inlet and the outlet may be arranged along outer edges of each of the unit cooling plates that face each other in the first direction, and be open from the outer edge of each unit cooling plate in the first direction.

Each of the unit cooling plates may include a cooling flow path with the inlet and the outlet provided at opposite ends of the cooling flow path.

The cooling flow path may extend from the outer edge of the unit cooling plate toward an inner edge of the unit cooling plate.

The cooling flow path may include a bent portion in a U-shape at an inner edge position of the unit cooling plate.

For example, the cooling flow path may extend in the first direction as a main longitudinal direction, and each of the unit cooling plates may include two or more cooling flow paths that extend in parallel to each other.

In each unit block a number of the unit cells arranged in the first direction may be less than a number of the unit cells arranged in the second direction.

The first type current collector plates may connect unit current collectors that are adjacent to each other in the first direction as parallel modules, and the second type current collector plates may serially connect parallel modules that are adjacent to each other in the first direction.

The first type current collector plates may extend in the first direction to form unit current collectors that are arranged adjacent to each other as parallel modules.

The second current collector plates may include different segments extending in the first direction and the second direction such that the second current collector plates serially connect parallel modules arranged adjacent to each other in the first direction.

Each of the third type current collector plates may extend i) across terminals of unit cells in the first direction to form one of the parallel cell streams, and ii) extend across terminals of unit cells that are adjacent to each other in the second direction to serially connect parallel cell streams adjacent to each other in the second direction.

The battery pack may further include an upper cover and a lower cover with the plurality of unit cells positioned between the upper cover and the lower cover, and the upper cover and the lower cover being arranged to face each other in a third direction intersecting the first direction and the second direction.

An alignment rib may be formed in at least one of the upper cover and the lower cover.

The alignment rib may include upper ribs protruding from a main body of the upper cover toward the unit cells in the third direction intersecting the first direction and the second direction, and with the third ribs extending in the second direction to separate the plurality of unit cells arranged in the first direction.

The alignment rib may include lower ribs protruding from a main body of the lower cover toward the unit cooling plates in the third direction intersecting the first direction and the second direction, with the lower ribs extending in the first direction and the second direction to separate the plurality of unit cooling plates arranged in the first direction and the second direction.

The upper cover may comprise an upper flange and the lower cover may comprise a lower flange, with the upper flange and the lower flange surrounding an exterior of an accommodation space accommodating the plurality of unit cells, and the upper flange and the lower flange coupled to and abutting each other.

At least some of the above and other features of the invention are set out in the claims.

### BRIEF DESCRIPTION OF THE DRAWINGS

The above and other aspects, features, and advantages of certain embodiments of the present disclosure will be more apparent from the following description taken in conjunction with the accompanying drawings.
FIG. 1 is an exploded perspective view of a battery pack according to embodiments of the present disclosure;
FIG. 2 is an exploded perspective view for describing an electrical connection in a unit cell applicable to a battery pack of FIG. 1 and a first current collector plate and a second current collector plate that form the electrical connection;
FIG. 3 is an exploded perspective view for describing an electrical connection in another unit cell applicable to a battery pack of FIG. 1 and a first current collector plate and a second current collector plate that form the electrical connection;
FIG. 4 is a perspective view for describing a third current collector plate shown in FIG. 1 and an electrical connection of a plurality of unit cells by the third current collector plate;
FIG. 5 is an exploded perspective view showing an arrangement of a plurality of unit cells, a heat transfer sheet allocated to each unit cell, and a unit cooling plate allocated to each unit block including the plurality of unit cells;
FIG. 6 is an exploded perspective view showing an arrangement among a unit cell, a heat transfer sheet, and a unit cooling plate, shown in FIG. 5, and a structure of a cooling flow path formed together on the unit cooling plate;
FIG. 7 is an exploded perspective view showing a structure of a cooling flow path of a unit cooling plate shown in FIG. 6;
FIG. 8 is a perspective view showing a unit cooling plate shown in FIG. 7;
FIGS. 9A and 9B are different exploded perspective views and plane views for describing an upper rib formed on an upper cover;
FIG. 10 is a cross-sectional view taken along line X-X of FIG. 9B; and
FIG. 11 is an exploded perspective view for describing a lower rib formed on a lower cover.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, a battery pack according to embodiments of the present disclosure will be described with reference to the drawings attached to the specification.

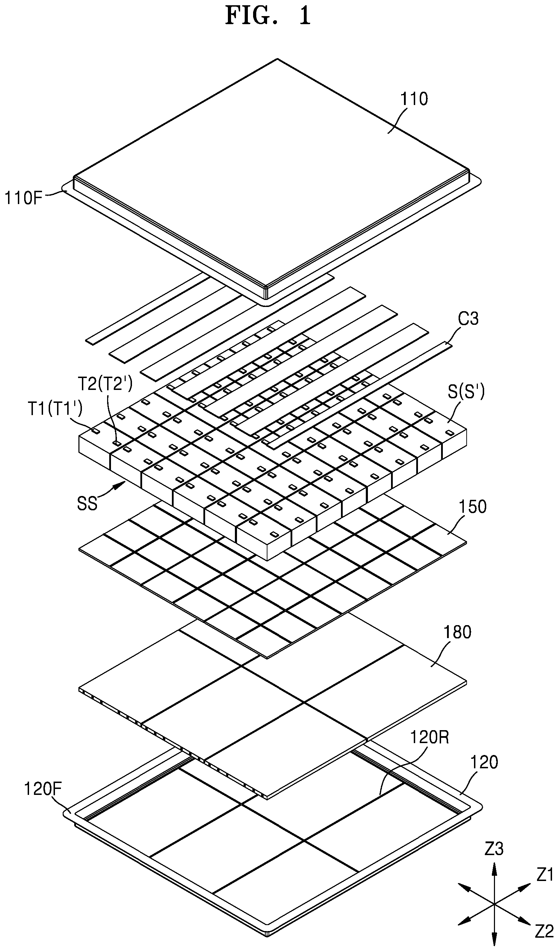

FIG. 1 is an exploded perspective view of a battery pack according to embodiments of the present disclosure.

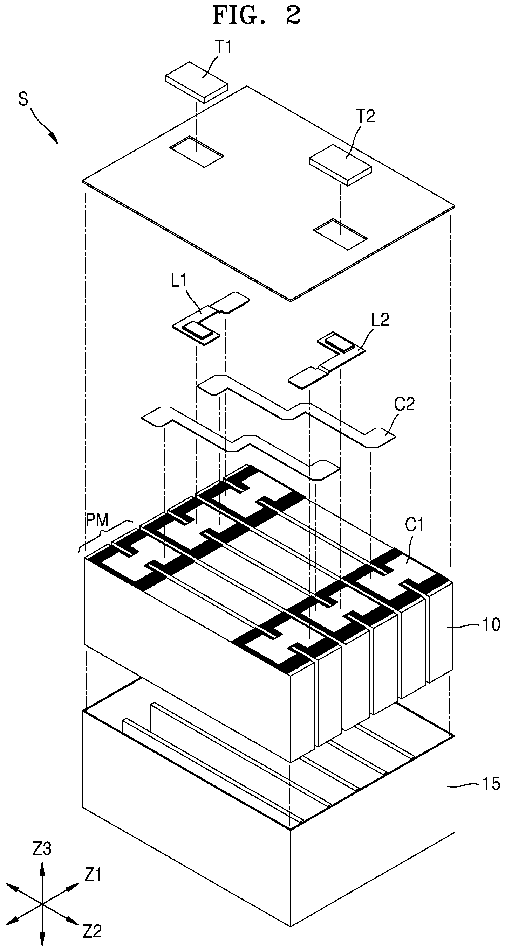

FIG. 2 is an exploded perspective view for describing an electrical connection in a unit cell applicable to a battery pack of FIG. 1 and a first current collector plate and a second current collector plate that form the electrical connection.

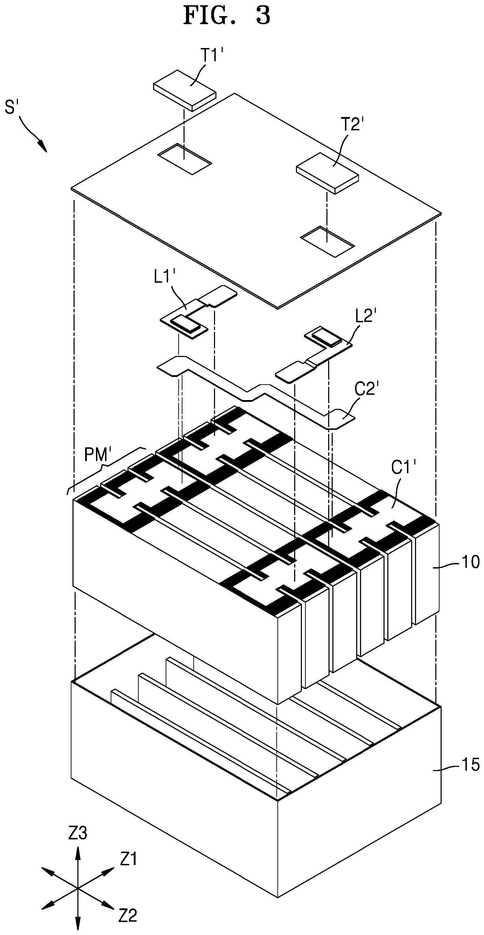

FIG. 3 is an exploded perspective view for describing an electrical connection in another unit cell applicable to a battery pack of FIG. 1 and a first current collector plate and a second current collector plate that form the electrical connection.

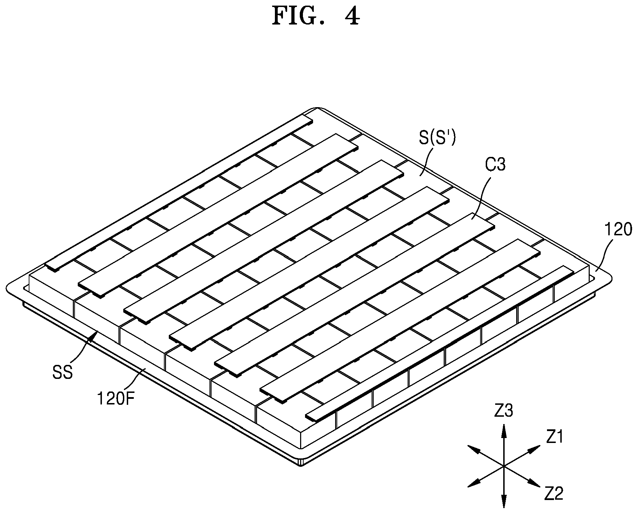

FIG. 4 is a perspective view for describing a third current collector plate shown in FIG. 1 and an electrical connection of a plurality of unit cells by the third current collector plate.

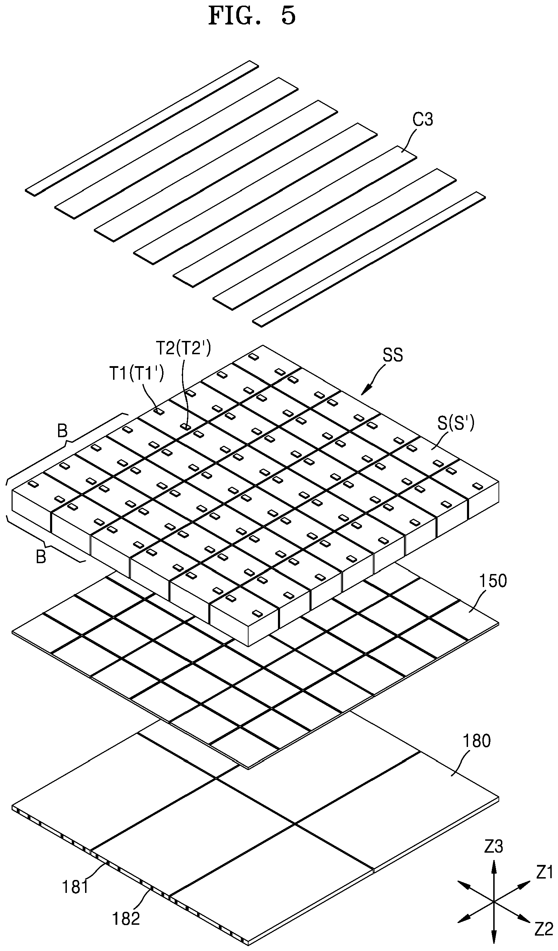

FIG. 5 is an exploded perspective view showing an arrangement of a plurality of unit cells, a heat transfer sheet allocated to each unit cell, and a unit cooling plate allocated to each unit block including the plurality of unit cells.

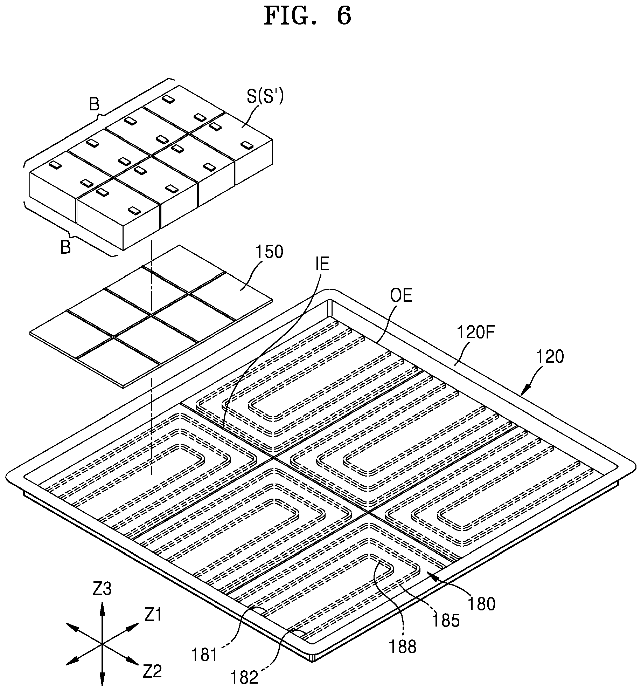

FIG. 6 is an exploded perspective view showing an arrangement among a unit cell, a heat transfer sheet, and a unit cooling plate, shown in FIG. 5, and a structure of a cooling flow path formed on the unit cooling plate, together.

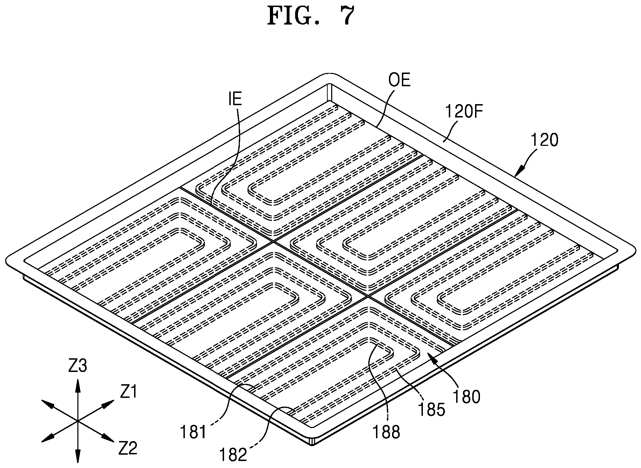

FIG. 7 is an exploded perspective view showing a structure of a cooling flow path of a unit cooling plate shown in FIG. 6.

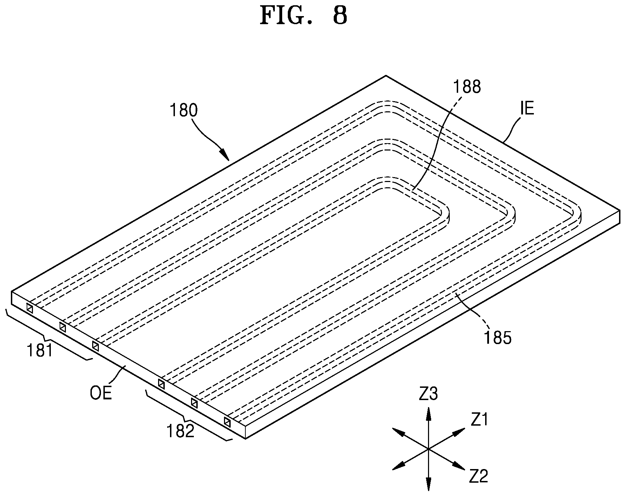

FIG. 8 is a perspective view showing a unit cooling plate shown in FIG. 7.

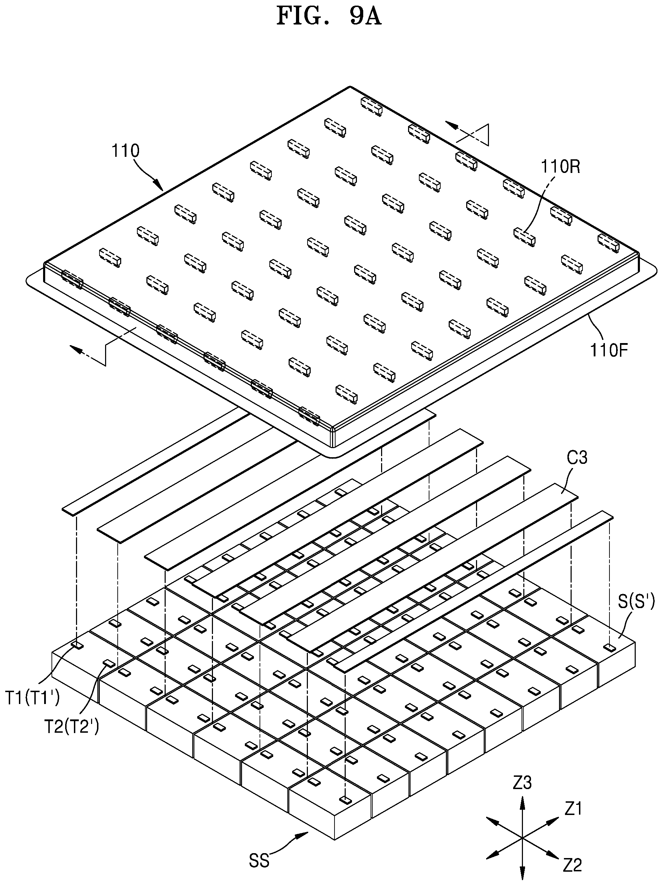

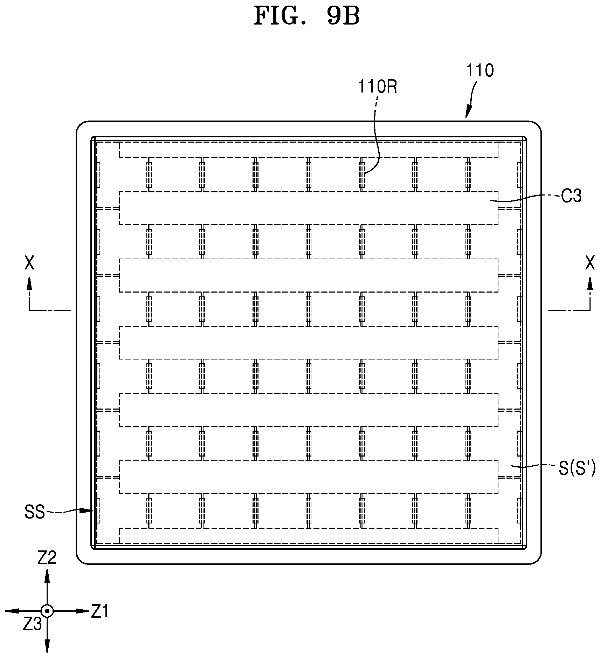

FIGS. 9A and 9B are different exploded perspective views and plane views for describing an upper rib formed on an upper cover.

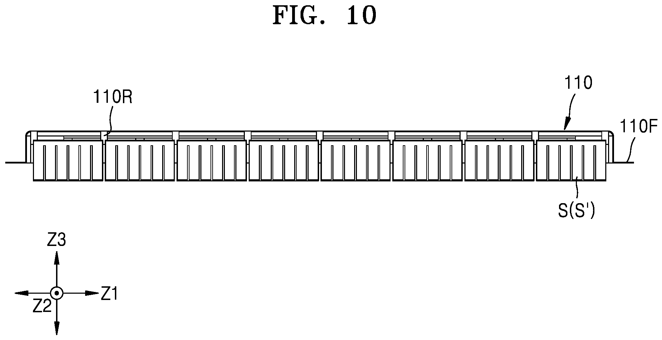

FIG. 10 is a cross-sectional view taken along line X-X of FIG. 9B.

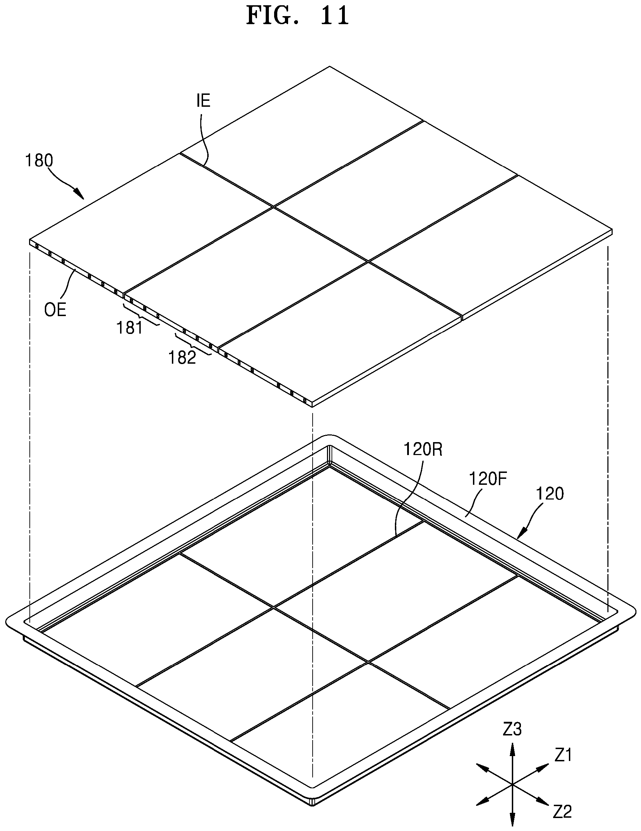

FIG. 11 is an exploded perspective view for describing a lower rib formed on a lower cover.

Referring to the drawings, a battery pack according to embodiments of the present disclosure may include unit cells S and S' which respectively include unit current collectors 10 and respectively include first-type current collector plates C1 and C1' for parallel connection between adjacent unit current collectors 10 and second-type current collector plates C2 and C2' for serial connection between adjacent unit current collectors 10 so as to accommodate the unit current collectors 10 connected in a serial-parallel combination. The battery pack also includes unit cooling plates 180, each of which includes an inlet 181 and an outlet 182 individually for each unit block B that includes unit cells S and S' arranged in a first direction Z1 in which the unit current collectors 10 are arranged and in a second direction Z2 intersecting the first direction Z1. See Fig. 5. A plurality of third-type current collector plates C3 form parallel cell streams SS by connecting L unit cells S and S' arranged in the first direction Z1 and by serially connecting adjacent parallel cell streams SS arranged in the second direction Z2. See Figs. 1 and 4.

The battery pack may further include heat transfer sheets 150 formed individually for each of the unit cells S and S' and interposed between the unit cells S and S' and the unit cooling plates 180 in a third direction Z3 intersecting the first direction Z1 and the second direction Z2 to mediate heat transfer.

Each of the unit cooling plates 180 may include the inlet 181 and the outlet 182 formed at an outer edge OE of each unit cooling plate 180. For example, the inlets 181 and the outlets 182 may be arranged along the outer edges OE of the unit cooling plates 180 facing each other in the first direction Z1, and the inlets 181 and outlets 182 may be opened from the outer edges OE of the unit cooling plates 180 in the first direction Z1.

Each of the unit cooling plates 180 may include the cooling flow path 185 having the inlet 181 and the outlet 182 as opposite ends of the cooling flow path 185.The cooling flow path 185 may extend from the outer edge OE of each unit cooling plate 180 toward an inner edge IE of each unit cooling plate 180 and include a bent portion 188 in a U-shape at the inner edge IE position of each unit cooling plate 180. The cooling flow path 185 may extend in the first direction Z1 as a main longitudinal direction and each of the unit cooling plates 180 may include two or more cooling flow paths 185 extending in parallel to each other.

The first-type current collector plates C1 and C1' may connect the unit current collectors 10, which are adjacent to each other in the first direction Z1, by the same parallel modules PM and PM'. The second-type current collector plates C2 and C2' may serially connect parallel modules PM and PM' that are adjacent to each other in the first direction Z1.

The third-type current collector plates C3 may extend in the first direction Z1 across first and second terminals T1 and T2 of the unit cells S and S' in the first direction Z1 such that each third-type current collector plate C3 forms one cell stream SS and the cell streams connected in parallel. Each of the third-type current collector plates also extends across the first and second terminals T1 and T2 of adjacent unit cells S and S' in the second direction Z2 to serially connect adjacent parallel cell streams SS in the second direction Z2.

The battery pack may further include an upper cover 110 and a lower cover 120 (see Figs. 1, 9 and 11) disposed to face each other in the third direction Z3 intersecting the first direction Z1 and the second direction Z2 with the plurality of unit cells S and S' therebetween. An alignment rib (e.g., an upper rib 110R or a lower rib 120R) may be formed in at least any one of the upper cover 110 and the lower cover 120. The upper rib 110R may be formed in the upper cover 110, and may include the upper rib 110R that protrudes toward the unit cells S and S' from a main body of the upper cover 110 in the third direction Z3 intersecting the first direction Z1 and the second direction Z2 and extends in the second direction Z2 to separate the plurality of unit cells S and S' arranged in the first direction Z1. T the lower rib 120R may be formed in the lower cover 110, and may include the lower rib 120R that protrudes toward the unit cooling plate 180 from a main body of the lower cover 120 in the third direction Z3 intersecting the first direction Z1 and the second direction Z2 and extends in the first direction Z1 and the second direction Z2 to separate the plurality of unit cooling plates 180 arranged in the first direction Z1 and the second direction Z2.

The upper cover 110 and the lower cover 120 may include an upper flange 110F and a lower flange 120F, respectively, surrounding an outer side of an accommodation space accommodating the plurality of unit cells S and S'. The upper cover 110 and the lower cover 120 may be coupled to each other with the upper flange 110F and the lower flange 120F contacting each other.

The battery pack according to embodiments of the present disclosure will now be described.

In embodiments of the present disclosure, the battery pack may include the plurality of unit cells S and S' arranged in first and second directions Z1 and Z2. The upper cover 110 and the lower cover 120 may be coupled to face each other with the plurality of unit cells S and S' therebetween. The unit cells S and S' may include the unit current collectors 10. For example, each of the unit cells S and S' may include two or more unit current collectors 10, with the plurality of unit current collectors 10 electrically connected in serial-parallel combination.

The plurality of unit current collectors 10 included in the unit cells S and S' may be arranged in the first direction Z1, and the plurality of unit current collectors 10 may be arranged in the first direction Z1 in each of the unit cells S and S' forming the battery pack. In the present specification, the first direction Z1 may mean a direction in which the plurality of unit current collectors 10 are arranged in each of the plurality of unit cells S forming the battery pack, and alignment in which the unit current collectors 10 are arranged may be maintained equally in the plurality of unit cells S and S' forming the battery pack. The first direction Z1 may be defined globally in the battery pack with the plurality of unit cells S and S' and the plurality of unit current collectors 10 being arranged in the first direction Z1 in each of the unit cells S and S'. The second direction Z2 may mean a different direction intersecting the first direction Z1, e.g., a direction perpendicularly intersecting the first direction Z1.

In embodiments of the present disclosure, if the plurality of unit current collectors 10 included in each of the unit cells S and S' are connected in a "serial-parallel combination," it means that unit current collectors 10 are connected in parallel to form the parallel modules PM and PM' and the parallel modules PM and PM' are serially connected to each other, and the plurality of unit current collectors 10 included in each of the unit cells S and S' are electrically connected to each other.

The unit cells S and S' may include the first-type current collector plates C1 and C1' that form the unit current collectors 10 as one parallel module PM or PM' while connecting the different unit current collectors 10 in parallel. The unit cells S and S' may also include the second-type current collector plates C2 and C2' for serially connecting the parallel modules PM and PM' electrically connected by the first-type current collector plates C1 and C1'. The first-type current collector plates C1 and C1' may connect the same polarities of adjacent unit current collectors 10 to connect the adjacent unit current collectors in parallel in the first direction Z1. The first-type current collector plates C1 and C1' may include first-type current collector plates C1 and C1' having positive polarities that connect positive electrodes of adjacent current collectors and the first-type current collector plates C1 and C1' having negative polarities that connect negative electrodes of adjacent current collectors.

In embodiments of the present disclosure shown in FIG. 2, the first-type current collector plates C1 may each form two unit current collectors 10, which are adjacent to each other in the first direction Z1, into one parallel module PM while connecting the two unit current collectors 10 in parallel. The second-type current collector plates C2 may serially connect parallel modules PM that are adjacent to each other in the first direction Z1. Each of the second-type current collector plates C2 may include segments extending in the first direction Z1 and the second direction Z2 to simultaneously follow the first direction Z1 and the second direction Z2 that is different from the first direction Z1 so as to electrically connect the two parallel modules PM to each other. As such, the second-type current collector plates C2 may electrically connect opposite polarities of the adjacent parallel modules PM to each other while globally extending approximately in a diagonal direction. In embodiments of the present disclosure, the unit cell S may include a total of six unit current collectors 10 arranged in the first direction Z1, and may include a total of three positive-polarity first-type current collector plates C1 and a total of three negative-polarity first-type current collector plates C1 among the six unit current collectors 10 arranged in the first direction Z1, among which every two adjacent unit current collectors 10 form a parallel connection with each other. The unit cells may also include a total of two second-type current collector plates C2 among a total of three parallel modules PM formed by the six unit current collectors 10 arranged in the first direction Z1 among which every two adjacent parallel modules PM form a serial connection with each other. Thus, each of the first-type current collector plates C1 and the second-type current collector plates C2 may be electrically connected to a first electrode and a second electrode of unit current collectors 10 to form the parallel and serial connections.

In embodiments of the present disclosure, the battery pack may include a plurality of unit cells S and S', each of which may include a plurality of unit current collectors 10. Each of the unit current collectors 10 may include a positive plate and a negative plate which have opposite polarities, with a separator interposed therebetween. In various embodiments of the present disclosure, the positive plate, the negative plate, and the separator may be formed as a jelly-roll type with their structures wound together around a winding axis. In other embodiments, the unit current collectors 10 may be formed as a stack type in which the plurality of positive plates and the plurality of negative plates are stacked alternately with the separator therebetween. The positive plate and the negative plate of the unit current collector 10 may be electrically connected to the first electrode and the second electrode of the unit current collector 10, respectively, and as the first electrode and the second electrode of the unit current collector 10 are connected to the first-type current collector plates C1 and C1' and the second-type current collector plates C2 and C2', a serial-parallel combination connection of the plurality of unit current collectors 10 may be formed.

In various embodiments of the present disclosure, to provide different outputs and capacities depending on where the battery pack is used, various combinations are possible of serial-parallel connection for the unit current collectors 10 forming each of the unit cells S and S' may be formed. For example, the unit cell S shown in FIG. 2 includes a total of six unit current collectors 10, and every two unit current collectors 10 arranged in the first direction Z1 may be formed as one parallel module PM such that three parallel modules PM formed by the total of six unit current collectors 10 in the first direction Z1 may be serially connected to one another. Thus, unit cells S are formed including three parallel connections and two serial connections. To this end, three positive first type current collector plates C1, three negative first type current collector plates C1, and two second type current collector plates C2 may be included, in which first and second leads L1 and L2 and first and second terminals T1 and T2 connected to the highest potential and the lowest potential among the total of six unit current collectors 10 connected in series/in parallel may be included.

In another embodiment of the present disclosure, the unit cell S' shown in FIG. 3 may include a total of six unit current collectors 10, and every three unit current collectors 10 arranged in the first direction Z1 may be formed as one parallel module PM'. As such, two parallel modules PM' formed by the total of six unit current collectors 10 in the first direction Z1 may be serially connected to one another, thereby forming unit cells S' including two parallel connections and one serial connection. To this end, three positive first type current collector plates C1', three negative first type current collector plates C1', and one second type current collector plate C2' may be included, in which first and second leads L1' and L2' and first and second terminals T1' and T2' connected to the highest potential and the lowest potential among the total of six unit current collectors 10 connected in series/in parallel may be included.

In embodiments of the present disclosure, the unit cells S and S' may include a case 15 accommodating the plurality of unit current collectors 10 with first and second terminals T1/ T1' and T2/T2' having opposite polarities being formed on the case 15. The first and second terminals T1/T1' and T2/T2' of the unit cells S and S' may be connected to the unit current collector 10 having the highest potential and the unit current collector 10 having the lowest potential to form input/output terminals of each unit current collector 10. These input/output terminals are in electrical connection with the plurality of unit current collectors 10 by being electrically connected through a connection of the first type and the second type current collector plates C1/C1' and C2/C2'.

As described above, the first type and second type current collector plates C1/C1' and C2/C2' may be components for electrical connection between the plurality of unit current collectors 10 provided in each unit cell S or S'. The battery pack according to embodiments of the present disclosure may further include a plurality of third type current collector plates C3 for electrical connection between different unit cells S and S'. In embodiments of the present disclosure, the unit cells S and S' may be arranged in the first direction Z1 and the second direction Z2, and the plurality of unit cells S and S' arranged in the first direction Z1 may be connected in parallel to form the parallel cell streams SS. For example, the parallel cell streams SS may extend in the first direction Z1. Each of the parallel cell streams SS may be formed by one of the third type current collector plates C3 connecting in parallel a plurality of the unit cells S and S' that are arranged in the first direction Z1. Each of the parallel cell streams SS may extend in the first direction Z1 and may be serially connected to the parallel cell stream SS adjacent thereto in the second direction Z2 intersecting the first direction Z1. The third type current collector plates C3 may form the parallel cell streams SS while connecting the unit cells S and S' arranged in the first direction Z1 in parallel through a length extending in the first direction Z1, and serially connect different parallel cell streams SS arranged adjacent to each other in the second direction Z2 through a width extending in the second direction Z2 intersecting the first direction Z1. That is, each of the parallel cell streams SS may be formed by connecting the unit cells S and S' arranged in the first direction Z1 in parallel, and the parallel cell streams SS adjacent to each other in the second direction Z2 different from the first direction Z1 may be serially connected. As such, the third type current collector plate C3 may be formed as a simplified structure extending in the first direction Z1.

The plurality of unit cells S and S' forming the battery pack may be arranged in different first and second directions Z1 and Z2, and a group of unit cells S and S' arranged in the first direction Z1 and the second direction Z2 may form a unit block B. For example, in embodiments of the present disclosure, each unit block B may include three or four lines of unit cells S and S' arranged in the first direction Z1 and two lines of unit cells S and S' arranged in the second direction Z2. And, for example, a group of unit cells S and S' forming the unit block B may include a total of eight unit cells S and S'. The unit block B may equally divide a total (e.g., forty-eight) of the unit cells S and S' forming the battery pack (e.g., by six). Within a range of equally dividing the unit cells S and S' forming the battery pack, the number of a group of unit cells S and S' included in each unit block B is not limited, but to equally divide the whole unit cells S and S' arranged in the first direction Z1 and the second direction Z2, a plurality of at least two lines of unit cells S and S' may be formed as one unit block B in each of the first direction Z1 and the second direction Z2. As described above, the first type current collector plates C1 and C1' may form different unit current collectors 10 arranged in the first direction Z1 as parallel modules PM and PM', and the third type current collector plates C3 may form the different unit cells S and S', arranged in the first direction Z1, as the parallel cell streams SS.

In embodiments of the present disclosure, each of the parallel modules PM and PM' and the parallel cell streams SS may provide a parallel connection of the different unit current collectors 10 and different unit cells S and S', and, thus, may be defined based on an electrical connection rather than a physical arrangement. But, unlike the parallel modules PM and PM' and the parallel cell streams SS, the unit block B may be defined based on a physical arrangement rather than an electrical connection. And as described below, the unit block B may be defined as one cooling unit in which heat-dissipation is made by one unit cooling plate 180, and, thus, the unit block B may be defined based on a physical arrangement rather than an electrical connection and may include a group of unit cells S and S' that are adjacent to each other in the first and second directions Z1 and Z2. In embodiments of the present disclosure, the unit block B may correspond to the unit cooling plate 180 individualized for each unit block B, and each unit block B may be allocated with each individualized unit cooling plate 180 to cool each unit block B. When each unit cooling plate 180 is individualized or individually formed, it may mean that the cooling flow path 185 formed in each unit cooling plate 180 is not connected to the cooling flow path 185 of another adjacent unit cooling plate 180. An inlet 181 and an outlet 182 connected to each cooling flow path 185 are formed at one end and the other end of the cooling flow path 185 formed on or in each unit cooling plate 180, and the cooling path 185 having the inlet 181 and the outlet 182 as opposite ends is formed on or in each unit cooling plate 180.

In embodiments of the present disclosure, a unit cooling plate 180 may be allocated to each unit block B. Thus, the unit cooling plate 180 allocated to each unit block B may be provided in a number corresponding to the total number of unit blocks B, e.g., six unit blocks B forming the battery pack. For example, in embodiments of the present disclosure, the battery pack may include the unit blocks B and the unit cooling plate 180 of numbers corresponding thereto, and, more specifically, a total of "M" unit blocks B and a total of "M" unit cooling plates 180 (M being a given constant - e.g., M = six) may be provided.

Each of the unit cooling plates 180 may be arranged between the unit cells S and S' and the lower cover 120, and the upper cover 110 and the lower cover 120 may be coupled to face each other with the plurality of unit cells S and S' interposed therebetween. A plurality of unit cooling plates 180 may be provided to be arranged in the first direction Z1 and the second direction Z2. For example, the plurality of unit cooling plates 180 arranged in the first direction Z1 and the second direction Z2 may be compactly arranged adjacent to each other, and the inlet 181 and the outlet 182 of each of the unit cooling plates 180 may be formed at the outer edge OE of the unit cooling plate 180 and connected to outside of the battery pack. That is, the inlets 181 and the outlets 182 of the unit cooling plates 180 may be arranged along the outer edge OE of a group of unit cooling plates 180, e.g., a group of M unit cooling plates 180 in total. Each unit cooling plate 180 may include the inner edge IE surrounded by another adjacent unit cooling plate 180 and the outer edge OE not surrounded by another adjacent unit cooling plate 180. The inlet 181 and the outlet 182 of each of the unit cooling plates 180 may be formed at the outer edge OE. More specifically, the inlet 181 and the outlet 182 of each unit cooling plate 180 may be formed at the outer edge OE in the first direction Z1, and may be formed at the outer edge O in the first direction Z1 another unit cooling plate 180 that is adjacent in the first direction Z1.

Each of the unit cooling plates 180 may include the cooling flow path 185 having the inlet 181 and the outlet 182 as one end and the other end, and the cooling flow path 185 may extend in the first direction Z1 toward the inner edge IE from the outer edge OE at which the inlet 181 and the outlet 182 are formed. That is, the cooling flow path 185 may extend in the first direction Z1 with the first direction Z as a main longitudinal direction. More specifically, the cooling flow path 185 may extend in the first direction Z1 toward the inner edge IE from the outer edge OE where the inlet 181 at one end is formed, and extend toward the outer edge OE in the first direction Z1 from the inner edge IE through the bent portion 188 having a U-shape to the outlet 182 at the other end at the outer edge OE. The cooling flow path 185 may be formed in the shape of a U extending in the first direction Z1 as the main longitudinal direction Also, each unit cooling plate 180 may include a plurality of cooling flow paths 185 extending in parallel.

The cooling flow path 185 formed in each unit cooling plate 180 may extend in the first direction Z1 that the parallel cell streams are formed, extend across the unit cells S and S' formed at similar electrical connection positions in electrical connection of the whole unit cells S and S' or the unit cells S and S' formed at similar physical positions in physical arrangement of the whole unit cells S and S' and the plurality of unit cells S and S' likely to generate similar levels of heat. The cooling flow paths 185 may prevent degradation of a heat-dissipating performance of the unit cells S and S' due to, for example, unbalanced heat generation of the unit cells and Sa and S'.

The unit cooling plates 180 may perform cooling for each parallel cell stream SS formed in the first direction Z1, through the cooling flow paths 185 extending in the first direction Z1. For example, the same cooling flow path 185 or the same unit cooling plate 180 may provide cooling for the same parallel cell stream SS, e.g., the parallel cell streams SS of two lines adjacent to each other in the second direction Z2. As another example, for cooling of the parallel cell stream SS arranged in a relatively outer line in the second direction Z2 and the parallel cell stream SS arranged in a relatively inner line in the second direction Z2, cooling may be provided through different cooling flow paths 185, thereby preventing differential cooling performances from being provided before and after cooling of a relatively high-temperature parallel cell stream SS (e.g., the parallel cell stream SS at the inner position in the second direction Z2), and, thus, preventing the overall temperature distribution of the battery pack from becoming uneven due to differential cooling performances. If the number of unit cells S and S' arranged in the second direction Z2 forming one unit block B (e.g., two unit cells S and S' in the second direction Z2) is less than the number of unit cells S and S' arranged in the first direction Z1 to form the same unit block (e.g., four unit cells S and S' arranged in the first direction Z1), different cooling flow paths 185 may be arranged for different lines in the second direction Z2 and different cooling flow paths 185 may be allocated to different lines in the second direction Z2. In embodiments of the present disclosure, the second direction Z2 may correspond to a serial-connection direction formed by the third type current collector plate C3, and the first direction Z1 may correspond to a parallel-connection direction formed by the third type current collector plate C3. Further, the unit cells S and S' arranged on the same line in the second direction Z2 may have the same potential in the global electrical connection of the battery pack, such that to allocate the same cooling flow path 185 or the same unit cooling plate 180 to the unit cells S and S' arranged on the same line in the second direction Z2, the number of unit cells S and S' arranged in the second direction Z2 to form the same unit block B may be less than the number of unit cells S and S' arranged in the first direction Z1 and at the same time, the main longitudinal direction of the cooling flow path 185 may be the first direction Z1.

Each of the cooling flow paths 185 may extend in the first direction Z1 where the parallel cell streams SS are formed, and the cooling flow path may include the inlet 181 and the outlet 182 at the outer edge OE opened in the first direction Z1, and form the bent portion 188 in the U-shape at the inner edge IE, thereby doubling a heat-dissipating path for the same unit block B. The unit cooling plates 180 may be arranged in two lines in the first direction Z1, and the unit cooling plates 180 arranged in two lines may respectively include the outer edges OE in opposite positions in the first direction Z1, and the unit block B at the front of the line in the first direction Z1 may include the outer edge OE at the front position and the unit block B at the rear of the line in the first direction Z1 may include the outer edge OE at the rear position.

In embodiments of the present disclosure, a heat transfer sheets 150 may be arranged between the unit cells S and S' and the unit cooling plate 180, thereby mediating heat transfer between the unit cells S and S' and the unit cooling plate 180. The heat transfer sheets 150 may be individually formed for each unit cell S and S'. That is, the heat transfer sheets 150 may be individually formed for each unit cell S and S' unlike the unit cooling plates 180, which are individually formed for each unit block B including the plurality of unit cells S and S'. As a heat transfer sheet 150 is individually formed for each unit cell S and S' corresponding to a heat source, the individual heat transfer sheet 150 may prevent heat diffusion between the adjacent unit cells S and S'.

In embodiments of the present disclosure, the battery pack may include the upper cover 110 and the lower cover 120 coupled to face each other with the plurality of unit cells S and S' therebetween. The upper cover 110 and the lower cover 120 may be coupled to face each other in the third direction Z3 intersecting the first and second directions Z1 and Z2. The upper cover 110 and the lower cover 120 may include the upper flange 110F and the lower flange 120F, respectively, surrounding an accommodation space accommodating the plurality of unit cells S and S'. As the upper flange 110F and the lower flange 120F of the upper flange 120F contact each other, the upper cover 110 and the lower cover 120 may be coupled to face each other. The upper flange 110F and the lower flange 120F may provide a flat coupling surface for the upper cover 110 and the lower cover 120 (a coupling surface of a flat level in the third direction Z3).

In the upper cover 110, upper ribs 110R for regulating an assembly position of the unit cells S and S' arranged adjacent to the upper cover 110 may be formed in the third direction Z3 intersecting the first direction Z1 and the second direction Z2. In the lower cover 120, lower ribs 120R for regulating an assembly position of the unit cooling plate 180 arranged adjacent to the lower cover 120 may be formed in the third direction Z3. More specifically, the upper ribs 110R may protrude from a main body of the upper cover 110 toward between the unit cells S and S' (protrude in the third direction Z3 intersecting the first direction Z1 and the second direction Z2), and, thus, be interposed between the plurality of unit cells S and S' arranged in the first direction Z1. The upper ribs 110R may regulate the assembly position of the unit cells S and S' and maintain a gap between the plurality of unit cells S and S' arranged in the first direction Z1, and the upper ribs 110R may extend in the second direction Z2 between the unit cells S and S' adjacent to each other in the first direction Z1. By maintaining the gaps between the plurality of unit cells S and S' arranged in the first direction Z1, the upper rib 110R may block movement between the adjacent unit cells S and S' and prevent degradation of the rigidity of the battery pack due to the movement between the unit cells S and S1'. In embodiments of the present disclosure, the upper rib 110R may extend in the second direction Z2 between the unit cells S1 and S' adjacent to each other in the first direction Z1, instead of extending in the first direction Z1 between the parallel cell streams SS or the unit cells S and S' adjacent to each other in the second direction Z2, so as to avoid interrupting electrical connection between the parallel cell streams SS adjacent to each other in the second direction Z2 intersecting the first direction Z1 while extending in the first direction Z1 between the adjacent unit cells S and S'.

The lower ribs 120R may protrude in the third direction Z3 intersecting the first direction Z1 and the second direction Z2 while protruding from the main body toward between the unit cooling plates 180, thus protruding between the unit cooling plates 180 arranged in the first direction Z1 and the second direction Z2. The lower ribs 120R may extend in a grid shape in the first direction Z1 and the second direction Z2 between the unit cooling plates 180 arranged in the first direction Z1 and the second direction Z2 so as to regulate the assembly positions of the unit cooling plates 180. The lower ribs 120R may thereby prevent instability, imbalance, or vacuum/absence of cooling from occurring due to movement of the unit cooling plates 180 arranged in the first direction Z1 and the second direction Z2, overlapping of the unit cooling plates 180, or the unit cooling plates 180 from becoming excessively separated from each other.

In embodiments of the present disclosure, the battery pack may include the plurality of unit cells S and S' arranged in the first direction Z1 and the second direction Z2, and may include eight lines of unit cells S and S' arranged in the first direction Z1 and six lines of unit cells S and S' arranged in the second direction Z2 for a total of 48 unit cells S and S'. Unit cells S and S' arranged in the first direction Z1 and the second direction Z2, e.g., in the illustrated embodiments, four lines of unit cells S and S' arranged in the first direction Z1 and two lines of unit cells S and S' arranged in the second direction Z2 may form one unit block B, and the unit cells S and S' forming the battery pack may form a total of six unit blocks B. Further, two lines of unit blocks B arranged in the first direction Z1 and three lines of unit blocks B arranged in the second direction Z2 may be provided. The parallel cell streams SS formed in the first direction Z1 may include unit cells S and S' arranged in the first direction Z1, and in the illustrated embodiments, eight unit cells S and S' provided. Each of the unit cells S and S' may include unit current collectors 10 arranged in the first direction Z1, and in embodiments of the present disclosure, the unit cells S and S' may include a total of six unit current collectors 10.

In the battery pack illustrated in FIG. 1, the third type current collector plate C3 may connect in parallel the plurality of unit cells S and S' arranged in the first direction Z1 (corresponding to the parallel connection direction) to form the parallel cell stream SS, and connect in series the parallel cell streams SS adjacent to each other in the second direction Z2 (corresponding to the serial connection direction) intersecting the first direction Z1. The unit cells S and S' arranged in the same line in the second direction Z2 may have a globally equal potential in the overall electrical connection of the battery pack. As such, to allocate the same cooling flow path 185 or the same unit cooling plate 180 to the unit cells S and S' arranged on the same line in the second direction Z2, the number of unit cells S and S' arranged in the second direction Z2 to form the same unit block B may be limited to be less than the number of unit cells S and S' arranged in the first direction Z1 to form the same unit block B, and at the same time, the main longitudinal direction of the cooling flow path 185 is formed as the first direction Z1, thereby preventing the temperature distribution of the battery pack from becoming uneven. However, in various embodiments of the present disclosure, an arrangement or shape of the third type current collector plate C3 is not limited to a configuration in which the plurality of unit cells S and S' arranged in the first direction Z1 (corresponding to the parallel connection direction) are formed as the parallel cell streams SS and the parallel cell streams SS adjacent to each other in the second direction Z2 (corresponding to the serial connection direction) are serially connected, as shown in FIG. 1. In various embodiments of the present disclosure, the third type current collector plate C3 may connect in parallel the plurality of unit cells S and S' in the second direction Z2 (corresponding to the parallel connection direction) and connect in series the parallel cell streams SS adjacent to each other in the first direction Z1 (corresponding to the serial connection direction). In other embodiments of the present disclosure, the plurality of unit cells S and S' forming the battery pack may include parallel connections and/or serial connections formed in various directions including the first direction Z1 and the second direction Z2 from various shapes and arrangements of the third type current collector plate C3, and in various serial-parallel combination connections, the parallel connection direction and the serial connection direction may be formed in various directions including the first direction Z1 and the second direction Z2. For example, in embodiments of the present disclosure, the plurality of unit cells S and S' forming the battery pack may be connected in parallel or in series all together through the third type current collector plate C3.

Although the present disclosure has been described with reference to examples shown in the drawings, it will be understood by those of ordinary skill in the art that various modifications and equivalent other examples may be made .

According to the present disclosure, there may be provided a battery pack adaptively designed to provide a capacity and an output required according to demands for the battery pack, with the battery pack including a plurality of battery cells and having a simplified electrical connection structure among the plurality of battery cells such that a cooling structure of the plurality of battery cells may have uniform cooling without temperature dispersion.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery pack comprising:
a plurality of unit cells, each comprising unit current collectors accommodated therein, each of the unit current collectors comprising a first-type current collector plate for a parallel connection between adjacent unit current collectors and a second-type current collector plate for a serial connection between adjacent unit current collectors such that the unit current collectors are connected in a serial-parallel combination;
a unit cooling plate for each unit block that comprises unit cells of the plurality of unit cells arranged in a first direction in which the unit current collectors are arranged, and in a second direction intersecting the first direction, each of the unit cooling plates comprising an inlet and an outlet; and
a plurality of third-type current collector plates forming parallel cell streams by connecting unit cells of the plurality of unit cells, the third-type current collector plates being arranged in parallel in the first direction, and the third-type current collector plates serially connecting adjacent parallel cell streams arranged in the second direction.

2. The battery pack as claimed in claim 1, further comprising heat transfer sheets positioned between the unit cells and the unit cooling plates in a third direction intersecting the first direction and the second direction, the heat transfer sheets being configured to mediate heat transfer, and each of the heat transfer sheets being provided for one of the unit cells.

3. The battery pack as claimed in claim 1, the inlet and the outlet are formed at an outer edge of each of the unit cooling plates.

4. The battery pack as claimed in claim 3, wherein the inlet and the outlet are arranged along outer edges of the unit cooling plates that face each other in the first direction, and open from the outer edge of each unit cooling plate in the first direction.

5. The battery pack as claimed in claim 3, wherein each of the unit cooling plates comprises a cooling flow path with the inlet and the outlet provided at opposite ends of the cooling flow path.

6. The battery pack as claimed in claim 5, wherein the cooling flow path extends from the outer edge of the unit cooling plate toward an inner edge of the unit cooling plate.

7. The battery pack as claimed in claim 6, wherein the cooling flow path comprises a bent portion in a U-shape at an inner edge position of the unit cooling plate.

8. The battery pack as claimed in claim 6, wherein the cooling flow path extends in the first direction as a main longitudinal direction, and each of the unit cooling plates include two or more cooling flow paths that extend parallel to each other.

9. The battery pack as claimed in claim 1, wherein in each unit block, a number of the unit cells arranged in the first direction is less than a number of the unit cells arranged in the second direction.

10. The battery pack as claimed in claim 1, wherein the first type current collector plates connect unit current collectors that are adjacent to each other in the first direction as parallel modules, and the second type current collector plates serially connect parallel modules that are adjacent to each other in the first direction.

11. The battery pack as claimed in claim 10, wherein the first type current collector plates extend in the first direction to form unit current collectors that are arranged adjacent to each other as parallel modules.

12. The battery pack as claimed in claim 10, wherein the second current collector plates comprise segments extending in the first direction and the second direction such that the second current collector plates serially connect parallel modules arranged adjacent to each other in the first direction.

13. The battery pack as claimed in claim 1, wherein each of the third type current collector plates:
i) extends across terminals of unit cells in the first direction to form one of the parallel cell streams, and
ii) extends across terminals of unit cells that are adjacent to each other in the second direction to serially connect parallel cell streams that are adjacent to each other in the second direction.

14. The battery pack as claimed in claim 1, further comprising an upper cover and a lower cover with the plurality of unit cells positioned between the upper cover and the lower cover, the upper cover and the lower cover being arranged to face each other in a third direction intersecting the first direction and the second direction, and optionally wherein the upper cover comprises an upper flange and the lower cover comprises a lower flange, with the upper flange and the lower flange surrounding an exterior of an accommodation space accommodating the plurality of unit cells, and the upper flange and the lower flange coupled to and abutting each other..

15. The battery pack as claimed in claim 14, wherein an alignment rib is formed in at least one of the upper cover and the lower cover, and optionally wherein the alignment rib comprises upper ribs protruding from a main body of the upper cover toward the unit cells in the third direction intersecting the first direction and the second direction, with the upper ribs extending in the second direction to separate the plurality of unit cells arranged in the first direction, and/or wherein the alignment rib comprises lower ribs protruding from a main body of the lower cover toward the unit cooling plates in the third direction intersecting the first direction and the second direction, the lower ribs extending in the first direction and the second direction to separate the plurality of unit cooling plates arranged in the first direction and the second direction.
